(19) Europäisches Patentamt
European Patent Office
Office européen des brevets

(11) **EP 2 921 832 B1**

(12) **EUROPEAN PATENT SPECIFICATION**

(45) Date of publication and mention
of the grant of the patent:
**15.06.2016  Bulletin 2016/24**

(51) Int Cl.:
***G01K 7/20*** *(2006.01)*

(21) Application number: **14001073.7**

(22) Date of filing: **21.03.2014**

(54) **3-WIRE RESISTANCE TEMPERATURE DETECTOR AND METHOD OF MEASURING SAID RESISTANCE**

3-DRAHT-WIDERSTANDSTEMPERATURFÜHLER UND VERFAHREN ZUR MESSUNG SEINES WIDERSTANDS

DÉTECTEUR DE TEMPÉRATURE À RÉSISTANCE À TROIS FILS ET MÉTHODE DE MESURE DE SA RÉSISTANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**23.09.2015  Bulletin 2015/39**

(73) Proprietor: **Linear Technology Corporation Milpitas, CA 95035-7417 (US)**

(72) Inventors:
• **Mayes, Michael Keith**
  **Nevada City, CA 95959 (US)**
• **Kaplan, Todd Stuart**
  **Grass Valley, CA 95945 (US)**
• **Bliss, David Edward**
  **Loomis, CA 95650 (US)**

(74) Representative: **Müller-Boré & Partner Patentanwälte PartG mbB Friedenheimer Brücke 21 80639 München (DE)**

(56) References cited:
**US-A- 3 913 403    US-A- 4 102 199**
**US-A- 5 351 010**

**Description**

BACKGROUND OF THE INVENTION

1. Field of the Invention

The present invention relates to circuits and methods for detecting temperature. In particular, the present invention relates to circuits and methods for detecting temperature using accurate resistance measurements.

2. Discussion of the Related Art

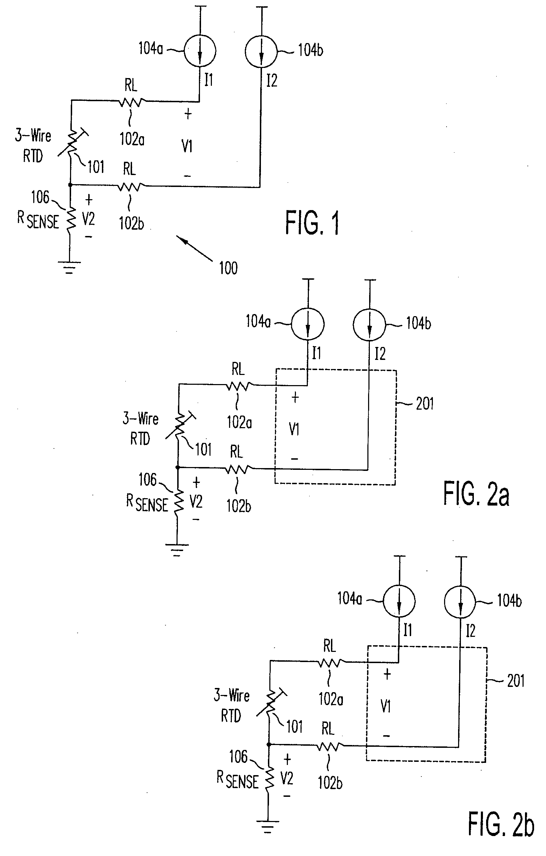

The resistance temperature detector (RTD) is a common temperature sensor that varies its resistance with temperature. Figure 1 shows temperature sensing circuit 100, which includes 3-wire RTD 101 that is conventionally used for temperature sensing. As shown in Figure 1, 3-wire RTD 101 (resistance $R_{RTD}$) is connected in series with sense resistor 106 (resistance $R_{sense}$). Current sources 104a and 104b (providing currents $I_1$ and $I_2$) are connected respectively to first and second terminals of 3-wire RTD 101. The lead wires 102a and 102b that respectively connect current sources 104a and 104b to 3-wire RTD 101 each have parasitic resistance $R_L$. Thus, voltage $V_1$ across 3-wire RTD 101, including the parasitic lead resistors 102a and 102b, is given by:

$$V_1 = I_1 * (R_{RTD} + R_L) - I_2 * R_L$$

The voltage across sense resistor 106 is given by:

$$V_2 = (I_1 + I_2) * R_{sense}$$

The resistance $R_{RTD}$ can be obtained from these equations. These equations assume that resistance $R_L$ in each of lead wires 102a and 102b are matched. An error in matching may result in an inaccurate temperature measurement. In order to alleviate the errors in matched resistance, the current sources 104a and 104b are also matched. Typically, in an integrated circuit implementation, current sources 104a and 104b are laid out in close proximity to allow the currents in current sources 104a and 104b to match. When properly matched, the currents $I_1$ and $I_2$ are equal and the resistances of lead wires 102a and 102b are each $R_L$, the resistance of $R_{RTD}$ is given by, where the effects of RL are cancelled:

$$R_{RTD} = 2 * R_{sense} * (V_1/V_2)$$

One drawback with the approach of temperature sensing circuit 100 is added complexity in testing, manufacturing and design of matched current sources.
United States patent 4,102,199 describes a method of measuring temperature relying on a number of 3-wire RTDs which can be sequentially addressed.

SUMMARY

The present invention provides, in a temperature sensing circuit, a method for measuring a resistance of a RTD device to sense temperature. The method includes (a) connecting a first terminal of the RTD device to a first current source and connecting a second terminal of the RTD device to a second current source; (b) measuring a first voltage across the RTD device; (c) connecting the second terminal of the RTD device to the first current source and connecting the first terminal of the RTD device to the second current source; (d) measuring a second voltage across the RTD device; and (e) deriving the resistance of the RTD device based on the first voltage measurement and the second voltage measurement. The RTD device may be connected in series with a sense resistor to ground.
To practice this method, according to one embodiment of the present invention, a temperature sensing circuit is provided, which includes (a) a first current source; (b) a second current source; and (c) a switch circuit configured, in a first configuration, to connect the first terminal of the RTD device to the first current source and the second terminal of the RTD device to the second current source, and configured, in a second configuration, to connect the second terminal of the RTD device to the first current source and the first terminal of the RTD device to the second current source. Each measurement of the resistance of the RTD device is made with two voltage measurements across the first and second terminals, in which the first voltage measurement has the switch circuit set in the first configuration and the second voltage measurement has the switch circuit set in the second configuration. The switch circuit may be implemented by pass transistors.

The present invention is better understood upon consideration of the detailed description below in conjunction with the accompanying drawings.

BRIEF DESCRIPTION OF THE DRAWINGS

Figure 1 shows temperature sensing circuit 100, which includes 3-wire RTD 101 that is conventionally used for temperature sensing.

Figures 2(a) and 2(b) show, respectively, switch circuit 201 of temperature sensing circuit 200 connecting current sources 104a and 104b to terminals of 3-wire RTD 101 in one polarity configuration and in an opposite polarity configuration.

To facilitate comparison between figures, like elements may be provided like reference numerals across figures.

DETAILED DESCRIPTION OF THE PREFERRED EMBODIMENTS

The present invention provides a method for temperature sensing using a 3-wire resistance temperature detection (RTD) device without requiring the sensing circuit to have matched current sources. According to one embodiment of the present invention, a switch circuit (e.g., switch circuit 201 of Figures 2(a) and 2(b) is provided which selectively connects each of current sources 104a and 104b to either terminal of 3-wire RTD 101. Switch circuit 201 may be implemented using four pass transistors. Figures 2(a) and 2(b) show, respectively, switch circuit 201 of temperature sensing circuit 200 connecting current sources 104a and 104b to terminals of 3-wire RTD 101 in one polarity configuration and in an opposite polarity configuration. As shown in Figure 2(a), in the first polarity configuration, 3-wire RTD 101 (resistance $R_{RTD}$) is connected in series with a sense resistor 106 (resistance $R_{sense}$ is known). Current sources 104a and 104b (providing currents $I_1$ and $I_2$) are connected respectively to first and second terminals of 3-wire RTD 101. The lead wires 102a and 102b that connect current sources 104a and 104b each have parasitic resistance $R_L$. A first measurement of voltages $V_1$ and $V_2$, across 3-wire RTD 101 and sensing resistor 106, respectively, is made in this first polarity configuration. As shown in Figure 2(b), in the second polarity configuration, current sources 104a and 104b (providing currents $I_1$ and $I_2$) are connected respectively to the second and the first terminals of 3-wire RTD 101. A second measurement of voltages $V_1$ and $V_2$, across 3-wire RTD 101 and sensing resistor 106, respectively, is made in this second polarity configuration.

The sum total of the voltages of $V_1$ across 3-wire RTD 101, measured in the two measurements, is given by:

$$\text{SUM}_{V1} = (I_1+I_2)*R_{RTD} +(I_1+I_2)*R_L- (I_1+I_2)*R_L = (I_1+I_2)*R_{RTD}$$

The sum total of the voltages of $V_2$ across sense resistor 106, measured in the two measurements, is given by:

$$\text{SUM}_{V2} = 2*(I_1+I_2)*R_{sense}$$

Using these equations, the resistance of $R_{RTD}$ is given by:

$$R_{RTD} = 2*R_{sense}*(\text{SUM}_{V1} / \text{SUM}_{V2})$$

The method of the present invention does not require currents $I_1$ and $I_2$ to be matched because, by making two measurements in opposite polarity configurations, the measured value of resistance $R_{RTD}$ is independent of the values of currents $I_1$ and $I_2$.

The detailed description above is provided to illustrate specific embodiments of the present invention and is not intended to be limiting. Numerous modifications and variations within the scope of the present invention are possible. The present invention is set forth in the accompanying claims.

**Claims**

1. A temperature sensing circuit (100) for measuring the resistance of a RTD device (101) having a first terminal and a second terminal, comprising:

   a first current source (104a);
   a second current source (104b); and
   a switch circuit (201) configured, in a first configuration, to connect the first terminal of the RTD device (101) to the first current source (104a) and the second terminal of the RTD device (101) to the second current source (104b), and configured, in a second configuration, to connect the second terminal of the RTD device (101) to the first current source (104a) and the first terminal of the RTD device (101) to the second current source (104b).

2. The temperature sensing circuit (100) of Claim 1, wherein each measurement of the resistance of the RTD device (101) is made with two voltage measurements across the first and second terminals, in which the first voltage measurement has the switch circuit (201) set in the first configuration and the second voltage measurement has the switch circuit (201) set in the second configuration.

3. The temperature sensing circuit (100) of Claim 1 or 2, wherein the RTD device (101) is connected in series with a sense resistor (106) to ground.

4. The temperature sensing circuit (100) of any one of Claims 1 - 3, wherein the switch circuit (201) comprises pass transistors.

5. A method for measuring the resistance of a RTD device (101) having a first terminal and a second terminal, comprising:

   connecting the first terminal of the RTD device (101) to a first current source (104a) and connecting the second terminal of the RTD device (101) to a second current source (104b);
   measuring a first voltage across the RTD device (101);
   connecting the second terminal of the RTD device (101) to the first current source (104a) and connecting the first terminal of the RTD device (101) to the second current source (104b);
   measuring a second voltage across the RTD device (101); and
   deriving the resistance of the RTD device (101) based on the first voltage measurement and the second voltage measurement.

6. The method of Claim 5, wherein RTD device (101) is connected in series with a sense resistor (106) to ground.

**Patentansprüche**

1. Temperaturerfassungsschaltung (100) zum Messen des Widerstands einer RTD-Vorrichtung (101), die einen ersten Anschluss und einen zweiten Anschluss aufweist, umfassend:

   eine erste Stromquelle (104a);
   eine zweite Stromquelle (104b); und
   einen Schalterschaltkreis (201), der konfiguriert ist, in einer ersten Konfiguration den ersten Anschluss der RTD-Vorrichtung (101) mit der ersten Stromquelle (104a) und den zweiten Anschluss der RTD-Vorrichtung (101) mit der zweiten Stromquelle (104b) zu verbinden, und konfiguriert ist, in einer zweiten Konfiguration den zweiten Anschluss der RTD-Vorrichtung (101) mit der ersten Stromquelle (104a) und den ersten Anschluss der RTD-Vorrichtung (101) mit der zweiten Stromquelle (104b) zu verbinden.

2. Temperaturerfassungsschaltung (100) nach Anspruch 1, wobei jede Messung des Widerstands der RTD-Vorrichtung (101) mit zwei Spannungsmessungen über dem ersten und dem zweiten Anschluss erfolgt, wobei bei der ersten Spannungsmessung der Schalterschaltkreis (201) in der ersten Konfiguration ist und bei der zweiten Spannungsmessung der Schalterschaltkreis (201) in der zweiten Konfiguration ist.

3. Temperaturerfassungsschaltung (100) nach Anspruch 1 oder 2, wobei die RTD-Vorrichtung (101) mit einem Abtastwiderstand (106) in Reihe geschaltet ist, und zwar mit Masse verbunden.

**4.** Temperaturerfassungsschaltung (100) nach einem der Ansprüche 1 - 3, wobei der Schalterschaltkreis (201) Pass-Transistoren umfasst.

**5.** Verfahren zum Messen des Widerstands einer RTD-Vorrichtung (101), die einen ersten Anschluss und einen zweiten Anschluss aufweist, umfassend:

Verbinden des ersten Anschlusses der RTD-Vorrichtung (101) mit einer ersten Stromquelle (104a) und Verbinden des zweiten Anschlusses der RTD-Vorrichtung (101) mit einer zweiten Stromquelle (104b);
Messen einer ersten Spannung über der RTD-Vorrichtung (101);
Verbinden des zweiten Anschlusses der RTD-Vorrichtung (101) mit der ersten Stromquelle (104a) und Verbinden des ersten Anschlusses der RTD-Vorrichtung (101) mit der zweiten Stromquelle (104b);
Messen einer zweiten Spannung über der RTD-Vorrichtung (101); und
Ableiten des Widerstands der RTD-Vorrichtung (101) basierend auf der ersten Spannungsmessung und der zweiten Spannungsmessung.

**6.** Verfahren nach Anspruch 5, wobei die RTD-Vorrichtung (101) mit einem Abtastwiderstand (106) in Reihe geschaltet ist, und zwar mit Masse verbunden.

**Revendications**

**1.** Circuit de détection de température (100) pour mesurer la résistance d'un dispositif de capteur de température à résistance RTD (101) ayant une première borne et une seconde borne, comprenant :

une première source de courant (104a) ;
une seconde source de courant (104b) ; et
un circuit de commutation (201) configuré pour connecter dans une première configuration la première borne du dispositif RTD (101) à la première source de courant (104a) et la seconde borne du dispositif RTD (101) à la seconde source de courant (104b), et configuré pour connecter dans une seconde configuration la seconde borne du dispositif RTD (101) à la première source de courant (104a) et la première borne du dispositif RTD (101) à la seconde source de courant (104b).

**2.** Circuit de détection de température (100) selon la revendication 1, dans lequel chaque mesure de la résistance du dispositif RTD (101) est réalisée avec deux mesures de tension en travers des première et seconde bornes, dans lesquelles la première mesure de tension a le circuit de commutation (201) réglé dans la première configuration et la seconde mesure de tension a le circuit de commutation (201) réglé dans la seconde configuration.

**3.** Circuit de détection de température (100) selon la revendication 1 ou 2, dans lequel le dispositif RTD (101) est connecté en série avec une résistance de détection (106) à la masse.

**4.** Circuit de détection de température (100) selon l'une quelconque des revendications 1 à 3, dans lequel le circuit de commutation (201) comprend des transistors ballast.

**5.** Procédé de mesure de la résistance d'un dispositif de capteur de température à résistance RTD (101) ayant une première borne et une seconde borne, comprenant :

connecter la première borne du dispositif RTD (101) à une première source de courant (104a) et connecter la seconde borne du dispositif RTD (101) à une seconde source de courant (104b) ;
mesurer une première tension en travers du dispositif RTD (101) ;
connecter la seconde borne du dispositif RTD (101) à la première source de courant (104a) et connecter la première borne du dispositif RTD (101) à la seconde source de courant (104b) ;
mesurer une seconde tension en travers du dispositif RTD (101) ; et
dériver la résistance du dispositif RTD (101) en fonction de la première mesure de tension et de la seconde mesure de tension.

**6.** Procédé selon la revendication 5, dans lequel le dispositif RTD (101) est connecté en série avec une résistance de détection (106) à la masse.

FIG. 1

FIG. 2a

FIG. 2b

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4102199 A